# EUROPÄISCHE PATENTSCHRIFT

(11) **EP 3 764 857 B1**
(45) Veröffentlichungstag und Bekanntmachung des Hinweises auf die Patenterteilung: **28.12.2022**
(21) Anmeldenummer: 19709881.7
(22) Anmeldetag: 06.03.2019
(51) Int. Cl.: A47J 31/44, A47J 31/40

(54) **VERFAHREN UND VORRICHTUNG ZUM ERZEUGEN VON MILCH-LUFT-EMULSIONEN**
METHOD AND DEVICE FOR PRODUCING MILK-AIR EMULSIONS
PROCÉDÉ ET DISPOSITIF POUR PRODUIRE DES ÉMULSIONS LAIT-AIR

(30) Priorität: 15.03.2018 DE 102018106032
(43) Veröffentlichungstag der Anmeldung: 20.01.2021
(73) Patentinhaber: Melitta Professional Coffee Solutions GmbH & Co. KG, 32429 Minden (DE)
(72) Erfinder: DIESTER, Thomas, 31675 Bückeburg (DE); BUCHHOLZ, Bernd, 32369 Rahden (DE)
(74) Vertreter: Specht, Peter
(86) Internationale Anmeldenummer: PCT/EP2019/055486
(87) Internationale Veröffentlichungsnummer: WO 2019/174980

(56) Entgegenhaltungen:
- EP-A1- 1 472 963
- EP-A1- 3 281 569
- EP-B1- 1 472 963
- WO-A1-2008/126037
- DE-A1- 19 955 195

## Beschreibung

Die Erfindung betrifft ein Verfahren und eine Vorrichtung zum Erzeugen einer Milch-Luft-Emulsion, vorzugsweise von Milchschaum.

Bei der Herstellung von milchhaltigen Getränken mit Milchschäumen können unterschiedliche Qualitäten von Milchschäumen den Geschmack des Getränks und die optische Erscheinung des Getränks deutlich beeinflussen. Hierzu wurden seitens der Anmelderin bereits einige Verbesserungen an einer Vorrichtung zur Herstellung von Milchschäumen vorgenommen.

Die DE 10 2014 105 108 A1 offenbart z.B. einen Homogenisator, welcher eine Optimierung des Milchschaumes aufgrund von Prallkörpern vornimmt, auf welche der Milchschaum trifft. Die DE 10 2014 112 178 A1 offenbart ein Luftzuführsystem mit einer Ansaugvorrichtung für Luft und eine Drossel zur gezielten Abgabe von Luft in Milch mit dem Ziel einer automatisierten Aufschäumung dieser Milch. Einen weiteren Stand der Technik offenbart die CH 705 720 A2, in welcher vorgeschlagen wird, Milchschaum - also eine Milch-Luft-Emulsion - in Abhängigkeit von der ermittelten Produkttemperatur zu erzeugen.

Aus der EP 1 472 963 B1 ist es bekannt, eine als Schlauchquetschpumpe ausgebildete Milchpumpe eine Einrichtung zur Ausgabe von Milch oder Milchschaum in ein Kühlfach zur Kühlung eines Milchbehälters zu integrieren.

Aus der DE 10 2017 113 832 A1 ist es bekannt, eine Regelung des Verfahrens in Abhängigkeit von zumindest einer ermittelten physikalischen Stoffeigenschaft vorzunehmen, welcher insbesondere die elektrische Leitfähigkeit sein kann.

Einen gattungsgemäßen Stand der Technik offenbart ferner die EP 3 281 569 A1. Nach diesem Stand der Technik werden Elemente einer Aufschäumvorrichtung, zu denen auch eine Milchleitung und eine Milchpumpe gehören, innerhalb einer Kühlkammer angeordnet.

Die vorstehenden Verfahren haben sich an sich bewährt. Es ist aber dennoch wünschenswert, mit einfachen Maßnahmen die Qualität des erzeugten Milchschaums - also der Milch-Luft-Emulsion - weiter zu verbessern.

Die Erfindung hat die Aufgabe, dieses Problem zu lösen.

Die Erfindung löst diese Aufgabe durch ein Verfahren mit den Merkmalen des Anspruchs 1 und durch eine Vorrichtung mit den Merkmalen des Anspruchs 13.

Das Kühlen kann somit an einer Stelle erfolgen, an welcher bereits aus der Milch und der Luft die Milch-Luft-Emulsion hergestellt ist oder an einer Stelle, an der dies noch nicht erfolgt ist,.

Es ist besonders zweckmäßig, wenn das direkte Kühlen der Milchpumpe direkt an dieser Komponente innerhalb eines Gehäuses eines Kaffeevollautomaten erfolgt. Damit wird die innerhalb des Komponentenweges von dem Milchbehälter zu den Auslassdüsen angeordnete Milchpumpe mit einer Kühlvorrichtung und ggf. werden auch Fluid-Leitungen für die Milch oder die Milch-Luftemulsion mit einer - ggf. derselben - Kühlvorrichtung aktiv gekühlt. Dabei ist vorteilhaft vorgesehen, dass diese Kühlvorrichtung separat und räumlich und baulich getrennt von einer ggf. optional vorgesehenen Kühlvorrichtung - in der Regel ein Kühlfach - zur Kühlung des Milchbehälters vorgesehen ist. Dies ist sehr vorteilhaft, da die Milchpumpe nicht direkt an dem Milchbehälter angeordnet und z.B. in deren Kühlschrank integriert werden muss, was den Aufbau und den Betrieb der Maschine unnötig komplizieren würde, insbesondere, wenn die Milchpumpe strömungstechnisch hinter einem Einlass für Luft in die Milch angeordnet ist bzw. wird.

Es können auch mehrere Kühlvorrichtungen und Kühlvorgänge eingesetzt werden, um die Qualität des Schaumes zu verbessern. So können auch Leitungen des Systems, insbesondere Zuleitungen für Milch und Luft zur und Ableitungen für den Milchschaum und die Milchpumpe gekühlt werden. Zudem ist es selbstverständlich weiter möglich und ggf. auch ergänzend sinnvoll, die Milch an sich an dem Kaffeevollautomaten gekühlt aufzubewahren. Zusätzlich kann ggf. auch der Milchbehälter gekühlt werden, nur wird diese Kühlung nicht im Rahmen der Erfindung allein für die Kühlung der Leitungen oder der Pumpe genutzt sondern es erfolgt dann eine zusätzliche Kühlung mit einer zusätzlichen Kühlreinrichtung.

Nach einer besonders vorteilhaften aber nicht zwingenden Variante kann vorgesehen sein, dass ein Pumpenkopf der Milchpumpe mit einer direkt der Milchpumpe, insbesondere einem Milchpumpenkopf, zugeordneten Kühlvorrichtung gekühlt wird. Denn durch eine aktive lokale Zwangskühlung des Milchpumpenkopfs kann die resultierende Gemisch-Temperatur auf besonders einfache Weise deutlich reduziert werden, was die Milchschaumeigenschaften deutlich verbessert und Schwankungen dieser stark reduziert. Mit einem solchen System können höhere Rohmilchtemperaturen prozesssicherer verarbeitet, bessere Schaumqualitäten erzeugt, Schaumeigenschaften konstanter hergestellt sowie Prozesszeiten und Milchverluste reduziert werden.

Das Verfahren kann vorteilhaft bei der Herstellung eines milchschaumhaltigen Getränkes, so eines Kaffeegetränks angewandt werden. Es sind sowohl Heiß- als auch Kaltgetränke mit Milchschaum im Rahmen des erfindungsgemäßen Verfahrens realisierbar.

Es ist besonders vorteilhaft, wenn als Kühlvorrichtung ein Peltierelement verwendet wird. Es kann aber auch vorgesehen sein, dass als Kühlvorrichtung eine ein Kühlfluid als Kühlmedium einsetzende Kühlung verwendet wird.

Vorteile dieser Varianten werden unter Bezug auf die bevorzugten Ausführungsbeispiele noch näher beschreiben.

Nach einer weiteren Variante der Erfindung kann vorgesehen sein, dass die Temperatur der Milchpumpe, insbesondere die Temperatur des Milchpumpenkopfes, direkt oder indirekt ermittelt wird und dass die ermittelte Temperatur als Information zur Steuerung oder Regelung des Betriebs der Kühlvorrichtung verwendet wird. Es ist aber alternativ oder ergänzend auch denkbar, dass die Temperatur der Milch-/Luftemulsion direkt oder indirekt ermittelt wird und dass die ermittelte Temperatur als Information zur Steuerung oder Regelung des Betriebs der Kühlvorrichtung verwendet wird.

Es kann vorgesehen sein, dass die Temperatur der Milch und/oder der Milch-/Luftemulsion und/oder der Milchpumpe direkt oder indirekt ermittelt wird und dass beim Überschreiten einer jeweiligen Grenztemperatur jeweils ein Warnsignal erzeugt wird.

Er kann ferner vorteilhaft vorgesehen sein, dass eine Milchpumpendrehzahl in Abhängigkeit von der Temperatur der Milch und/oder der Milch-/Luftemulsion und/oder der Milchpumpe gesteuert und/oder geregelt wird und/oder dass eine Luftzufuhr in Abhängigkeit von der Temperatur der Milch und/oder der Milch-/Luftemulsion und/oder der Milchpumpe gesteuert und/oder geregelt wird.

Zudem kann optional vorgesehen sein, dass das Durchführen des Verfahrens in Abhängigkeit von einem oder mehreren Grenzwerten der Temperatur der Milch und/oder der Milch-/Luftemulsion und/oder der Milchpumpe und in Abhängigkeit von einem Zeitparameter unterbrochen wird, beispielsweise, wenn keine hinreichend niedrige Temperatur trotz sämtlicher Kühlmaßnahmen aufgrund einer Störung oder sonstigen Ausnahmesituation erreicht wird.

Die Erfindung schafft auch eine Vorrichtung nach Anspruch 13 zur Durchführung eines Verfahrens nach einem der vorstehenden Ansprüche, Wie bereits in Hinsicht auf das erfindungsgemäße Verfahren erläutert, ist es dann vorteilhaft, wenn im Rahmen einer bevorzugten Ausgestaltung ein Pumpenkopf der Milchpumpe mit der direkt der Milchpumpe zugeordneten Kühlvorrichtung gekühlt wird und wenn die Kühlvorrichtung als ein Peltierelement ausgebildet ist oder ein solches aufweist oder wenn eine ein Fluid als Kühlmedium einsetzende Kühlvorrichtung verwendet wird.

Zudem kann zweckmäßig eine Steuerungs- und/oder Regelungsvorrichtung vorgesehen ist, welche dazu ausgelegt ist, die Temperatur der Milchpumpe, insbesondere die Temperatur des Milchpumpenkopfes direkt oder indirekt zu ermitteln und die ermittelte Temperatur als eine Information zur Steuerung oder Regelung des Betriebs der Kühlvorrichtung zu verwenden. Es ist aber auch denkbar, eine konstante Kühlleistung vorzugeben und dauerhaft zu aktivieren. Im Rahmen der vorliegenden Erfindung kann das erfindungsgemäße Verfahren und/oder die erfindungsgemäße Vorrichtung in einem Gerät zur Ausgabe, und insbesondere auch zur Zubereitung, eines milchhaltigen Getränkes, insbesondere eines milchhaltigen Kaffeegetränkes verwandt werden. Ein entsprechendes Gerät ist vorzugsweise als Kaffeevollautomat ausgebildet.

Weitere vorteilhafte Ausführungsformen sind in den abhängigen Ansprüchen genannt.

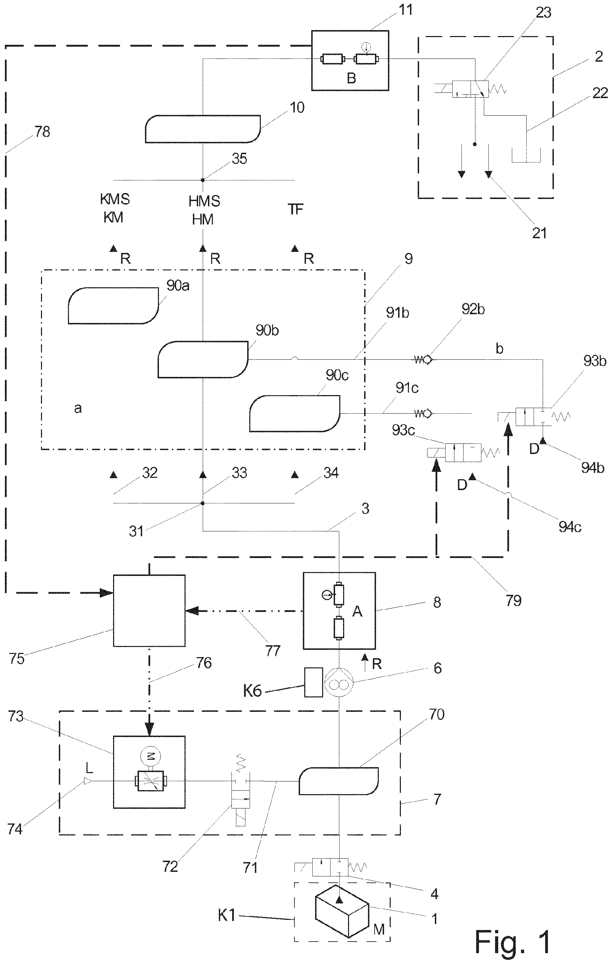

Nachfolgend wird die Erfindung unter Bezug auf die Zeichnung anhand eines Ausführungsbeispiels näher beschreiben. Es sei betont, dass das detaillierte Ausführungsbeispiel der Fig.1 nicht einschränkend zu verstehen ist. Die Erfindung wird bei diesem Ausführungsbeispiel besonders vorteilhaft umgesetzt, kann aber auch an Kaffeevollautomaten eingesetzt werden, die einen einfacheren Aufbau als dargestellt aufweisen, solange die im Rahmen des Hauptanspruches und der Unteransprüche genannten Merkmale verwirklicht sind. Es zeigt:
- Fig. 1: eine schematische Darstellung des Aufbaus einer ersten erfindungsgemäßen Vorrichtung zum Herstellen von Milch-Luft-Emulsionen, insbesondere von Milchschaum;
- Fig. 2: eine schematische Darstellung eines Versuchsaufbaus als Teil einer Vorrichtung nach Art der Fig. 1 zur Durchführung von Versuchen zum Stand der Technik;
- Fig. 3: ein Diagramm zur Visualisierung von Versuchsergebnissen mit dem Aufbau der Fig. 2.
- Fig. 4: eine schematische Darstellung eines Versuchsaufbaus als Teil einer Vorrichtung nach Art der Fig. 1 zur Durchführung von Versuchen zur Erfindung;
- Fig. 5: ein Diagramm zur Visualisierung von Versuchsergebnissen mit dem Aufbau der Fig. 4.
- Fig. 6: eine Sprengansicht einer Milchpumpe mit einer Kühlvorrichtung; und

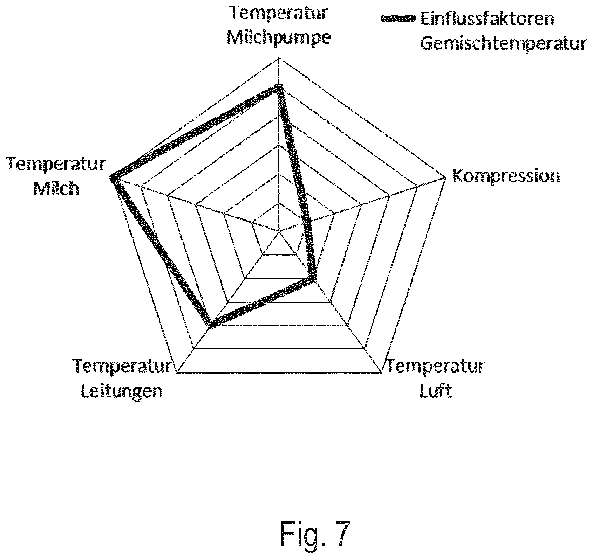

- Fig. 7: ein Diagramm zur Visualisierung des Einflusses verschiedener Temperaturen auf die Qualität einer Milch- Luftemulsion.

Vorstehend sowie im Folgenden werden die Begriffe "Milch-Luft-Gemisch" und "Milch-Luft-Emulsion" und "Milchschaum" synonym verwendet.

Die Vorrichtung der Fig. 1 weist folgenden Aufbau auf:
Eine Milchleitung 3 verbindet einen Milchbehälter 1 mit Milch M und eine Auslassvorrichtung 2 miteinander. Die Auslassvorrichtung 2 ist als Auslauf ausgebildet, unter den ein Gefäß wie Tasse gestellt werden kann. Im Folgenden werden die Begriffe Auslassvorrichtung 2 und Auslauf synonym verwendet. Dabei sind in die Milchleitung 3 zwischen dem Milchbehälter 1 und der Auslassvorrichtung 2 in dieser Reihenfolge hier zumindest folgende Komponenten geschaltet: ein Absperrventil 4, eine Milchpumpe 6, ein Luftzuführsystem 7, eine erste Messeinheit 8, eine Verarbeitungseinrichtung 9, sowie eine Nachbearbeitungsvorrichtung 10, und eine zweite Messeinheit 11.

Das Luftzuführsystem 7 weist eine Luftleitung 71 und ggf. eine Mischkammer 70 auf. In diese Mischkammer 70 wird die Milch über die Milchleitung 3 gefördert. Durch Lufteinleitung erfolgt ein Aufschäumen. Die Luftzufuhr kann mit einer Luftquelle 74 (z.B. einer Luftpumpe oder einem Druckbehälter oder einem nicht unter Druck stehenden Behälter versehen sein oder durch eine Öffnung bzw. ein Leitungsende (saugend) mit der Umgebungsluft innerhalb oder außerhalb einer umgebenden Maschine) erfolgen.

Zwischen der Mischkammer 70 und der Luftquelle 74 ist in die oder an der Luftleitung 71 ein erstes Rückschlagventil 72 geschaltet. Zudem ist entlang der Luftleitung zwischen dem ersten Rückschlagventil 72 und der Luftquelle 74 eine Stelleinheit 73 angeordnet. Diese ermöglicht das Einstellen des Luftdrucks mit der die Luft durch die Luftleitung 71 in die Milch eingeblasen wird. Dadurch wird zumindest ein Teil der Milch aufgeschäumt und es kommt zur Ausbildung einer Milch-/Luftemulsion. Die Stelleinheit 73 empfängt von einer Steuer- und/oder Regelvorrichtung 75 ggf. einen Steuerbefehl, welcher über eine Signalleitung 76 an die Stelleinheit 73 übertragen wird. Die Signalleitung 76 kann beispielsweise als ein Kabel oder als eine drahtlose Verbindung ausgebildet sein.

Die erste Messeinheit 8 misst/ermittelt Messdaten zur Ermittlung einer physikalischen Stoffeigenschaft. Diese Stoffeigenschaft ändert sich mit der Qualität des Milchschaumes, insbesondere dem Verhältnis von Luft zu Milch pro Kubikzentimeter Milchschaum. Eine solche physikalische Stoffeigenschaft kann besonders bevorzugt die elektrische Leitfähigkeit sein. Denn mit dieser kann gut die Beschaffenheit der Emulsion ermittelt und beurteilt werden. Es handelt sich um eine einerseits gute messbare und andererseits auch gut beeinflussbare Messgröße. Neben der elektrischen Leitfähigkeit kann allerdings auch die thermische Leitfähigkeit, die Dichte und/oder die Viskosität ermittelt werden. Hierfür kann die erste Messeinheit 8 wenigstens einen Leitfähigkeitssensor aufweisen. Weiterhin bevorzugt kann die erste Messeinheit einen Temperatursensor zur Temperaturkompensation der ermittelten Leitfähigkeit aufweisen. Zudem kann bevorzugt und vorteilhaft eine Anpassung der Temperatur der Milch- bzw. der Milch-Luft-Emulsion auf einen Sollwert durch Regulierung der Menge an zugeführter Kaltluft erfolgen.

Die erste Messeinheit 8 ist über eine Signalleitung 77, z.B. eine Kabelleitung oder eine drahtlose Datenleitung, mit der Steuer- und/oder Regelvorrichtung 75 verbunden und gibt die Messwerte an diese Steuer- und/oder Regelvorrichtung 75 weiter. Diese kann aus den Messdaten die entsprechende Stoffeigenschaft als ersten Istwert ermitteln und diese sodann mit einem vorgegebenen Sollwert eines Sollwertbereichs vergleichen. Bei einem Über- oder Unterschreiten des Sollwertes kann die Luftmenge, welche in die Milch eingeleitet wird, durch die Stelleinheit 73 verändert werden, derart, dass ein zweiter Istwert innerhalb des erlaubten Sollbereichs liegt. Es können auch je nach ausgewähltem Heißgetränk mehrere Sollwerte für die jeweiligen Sollwertbereiche in einem Datensatz oder mehreren Datensätzen auf einem Datenspeicher der Steuer- und/oder Regeleinheit hinterlegt sein. Zudem ist eine zentrale Recheneinheit vorgesehen, welche z.B. einen Vergleich zwischen Soll- und Istwerten spezifisch für das jeweilige Heißgetränk vornehmen kann.

Die Verarbeitungseinrichtung 9 weist als Teilstränge der Milchleitung 3 mehrere Verarbeitungsleitungen 32, 33 und 34 auf. Hierfür können eines oder mehrere Umschaltventile, z.B. Zwei- oder Drei-Wegeventile 31 und 35 vorgesehen sein, welcher derart geschaltet sein können, dass die Milch durch eine der Verarbeitungsleitungen 32, 33 oder 34 geleitet werden kann. Eine erste Verarbeitungsleitung 32 ist eine Durchleitung und weist keine Erwärmungseinheit (angedeutet dennoch durch ein Bezugszeichen: 90a) auf. Derart wird kalter Milchschaum weitergeleitet. Eine zweite Verarbeitungsleitung 33 weist eine erste Erwärmungseinheit 90b auf, welche der direkten Erwärmung von Milch dient. Die erste Erwärmungseinheit 90b weist eine Heizleitung 91b auf, durch welche durch eine Dampferzeugungseinheit 94b Dampf D direkt in die Emulsion einleitbar ist. Hierfür ist ein Stellventil 93b vorgesehen. Zwischen dem Stellventil 93b und dem Punkt der Einleitung des Dampfes D in die Milch ist ein Rückschlagventil 92b angeordnet. Eine dritte Verarbeitungsleitung 34 weist, alternativ oder zusätzlich zur ersten Erwärmungseinheit 90b zur direkten Erwärmung der Milch, eine zweite Erwärmungseinheit 90c auf, welche der indirekten Erwärmung von Milch dient. Diese zweite Erwärmungseinheit 90c kann z.B. als eine Wärmeübertragungseinrichtung, insbesondere als ein Wärmetauscher, ausgelegt sein. Der zweiten Erwärmungseinheit 90c kann eine Heizleitung 91 c zugeordnet sein, durch welche ausgehend von einer bzw. der Dampferzeugungseinheit 94c Dampf in die Erwärmungseinrichtung 90b zur indirekten Erwärmung einleitbar ist. Hierfür ist ein ansteuerbares Stellventil 93c vorgesehen, mit dem die Dampfzufuhr für Dampf D geöffnet und geschlossen werden kann. Zwischen dem Stellventil 93c und dem Punkt der Einleitung der Wärme des Dampfes D - insbesondere mittels eines Wärmetauschers - in die Milch ist ein Rückschlagventil 92c angeordnet.

Ein warmer Milchschaum (hier auch "TF" = Top Foam genannt) ist eine spezielle Milchschaumart, welche durch die definierten Anforderungen an Konsistenz, Stabilität, Thermorezeption und Optik, eine indirekte Erwärmung des kalten Milchschaums voraussetzt. (Eigenschaften die nicht durch das direkte Einbringen eines weiteren Mediums z.B. direkte Injektion vom Dampf D verändert werden). Vorzugsweise beträgt die Temperatur des kalten Milchschaums (KMS) < 30° C, des warmen Milchschaums (TF - T2) 40° bis 54° C und des heißen Milchschaums (HMS) 55° bis 80° C. Der heiße Milchschaum (HMS-T3) und die heiße Milch können mittels direkter Dampfinjektion sehr schnell sehr hoch erhitzt werden. (Hohe Ausgabeleistung bei hoher Temperatur (55-80 °C)).

Vorzugsweise ist die Verarbeitungseinrichtung 9 dazu ausgelegt, eine durchfließende Milch-Luft-Emulsion bzw. den kalten Milchschaum der Temperatur T1 auf eine Temperatur T2 zu erwärmen, die oberhalb der Temperatur T1 liegt, welche der kalte Milchschaum KMS aufweist und unterhalb der Temperatur T3, welche der heiße Milchschaum HMS aufweist. Derart wird der "warme" Milchschaum TF (Temperatur T2) erzeugt.

Die erste, zweite und dritte Verarbeitungsleitungen 32, 33, 34 können vorzugsweise als Dekompressionsleitungen ausgebildet sein. Dabei dient die erste Verarbeitungsleitung 32 der Erzeugung eines kalten Milchschaums kalter Temperatur T1, die zweite die Verarbeitungsleitung 33 mit der ersten Erwärmungseinheit 90b mit direkter Erwärmung kann der Erzeugung eines heißen Milchschaumes mit hoher Temperatur T3 dienen und die dritte Verarbeitungsleitung 34 mit der Erwärmungseinheit 90c kann der Erzeugung eines warmen Milchschaums mittlerer Temperatur T2 dienen, wobei folgende Beziehung gilt: T1 < T2 < T3. Die Verarbeitungsleitungen 32, 33, 34 sind hier parallel geschaltet.

Selbstverständlich ist es auch möglich einzelne Verarbeitungsleitungen, insbesondere die Verarbeitungsleitungen 33 und 34 zu einer einzigen Verarbeitungsleitung mit einer Möglichkeit zur Erwärmung, insbesondere zur Dampfeinleitung, zusammenzufassen. Es können derart auch alle drei Verarbeitungsleitungen 32-34 zu einer Verarbeitungsleitung zusammengefasst werden.

Insgesamt können heiße, warme und kalte Milch, je nach Nutzen von Heißdampf bei direkter Erwärmung, indirekte Erwärmung oder keiner Erwärmung, ausgegeben werden. Nach einer Variante werden in einen zunächst bereitgestellten Kaffee zwei verschieden temperierte Milchschäume gegeben oder es werden erst die zwei verschieden temperierten Milchschäume bereitgestellt und es wird dann ein Kaffee dazu gegeben.

Es kann derart z.B. auch eine kombinierte Heiß/Kalt-Verarbeitungsleitung 32/33 geschaffen werden bzw. vorgesehen sein und eine gesonderte Warm-Verarbeitungsleitung 34 mit indirekter Erwärmung des Milchschaumes bereitgestellt werden. Durch die Verarbeitungsleitung 34 fließt in diesem Fall somit ausschließlich warmer Milchschaum TF und die zusammengefasste Verarbeitungsleitung 32/33 fließt kalter oder heißer Milchschaum KMS, HMS oder heiße Milch HM oder kalte Milch KM ohne Schaum.

Die Erwärmungseinheit 90b beruht auf Erwärmung durch direktes Einleiten von Dampf. Die Erwärmungseinheit 90c kann vorzugsweise als ein dampfbetriebener oder wahlweise/vorzugsweise fluidbetriebener indirekter Wärmeüberträger ausgebildet sein, welcher wenn aktiviert, die Milch-Luft-Emulsion indirekt auf eine Temperatur T2 erwärmt. Die Temperatur T2 liegt vorzugsweise zwischen 40 °C und 54 °C.

Die indirekt wirkende Erwärmungseinheit 90c kann in verschiedenster Weise, so z.B. als Mantelrohr-Wärmeüberträger als Schicht-Wärmeüberträger oder als Spiralrohr-Wärmeüberträger, ausgebildet sein. Die Wärmeübertragung findet nach der Herstellung des kalten Milchschaums vor der Ausgabe statt. Vorteilhaft ist, wenn der warme Schaum TF mit der Temperatur T2 wie der kalte Milchschaum KMS mit der Temperatur T1 und der heiße Schaum HMS mit der Temperatur T3 einer optionalen Nachbehandlung in einer Nachbehandlungseinrichtung, insbesondere in einem Homogenisator 10, unterzogen werden.

Die eingebrachte Wärmeenergie der indirekt wirkenden Erwärmungseinheit 90c wird vorzugsweise über eine oder mehrere Kontaktheizflächen an den Milchschaum übertragen, in dieser Funktion ist zur Vergrößerung der Kontaktfläche und somit Wärmeübertragung auch ein zusätzlicher innerer oder äußerer Erwärmungskanal denkbar, sowie die Abfrage der Temperatur, im inneren des Elements, mit einem Fühler. Vorzugsweise dient Wasserdampf als Wärmeträger.

Die Konsistenz des noch kalten Milchschaums KMS mit der Temperatur T1, der aus der Pumpe 6 strömt, kann durch Einstellen der Fördermenge der Milchpumpe 6, insbesondere von der Milchpumpendrehzahl, verändert werden. Dies kann jedoch direkten Einfluss auf die Förderleistung und die Ausgabemenge haben. Die Luftmenge wird vorteilhaft durch Verändern der einstellbaren Drossel 72, welche bevorzugt als automatisch einstellbares Nadelventil ausgebildet ist, geändert.

Es ist ferner vorteilhaft, wenn sämtliche Abschnitte von Kaltwasser spülbar sind, wozu entsprechende Zuleitungen und Ventile vorgesehen sein können (hier nicht dargestellt).

Im Anschluss an die Verarbeitungseinrichtung 9 ist die Nachbearbeitungsvorrichtung 10, vorzugsweise mit einem Homogenisator, in der Milchleitung 3 angeordnet.

Bei bekannten Kaffeevollautomaten ist die Konsistenz des Milchschaums, und hier in erster Linie die Ausbildung der Luftblasen, oftmals sehr unregelmäßig. Durch den Homogenisator kann der erzeugte Milchschaums vorteilhaft vergleichmässigt werden. Nach einer besonders bevorzugten Variante wird zur Nachbehandlung des Milchschaumes ein Homogenisator geschaffen, der zum Verkleinern der Luftblasen eines Milchschaumes im Sinne einer Luft-/Milchemulsion bzw. eines Milch-Luftgemisches vorgesehen ist.

Im Anschluss an die Nachbearbeitungsvorrichtung kann eine zweite Messeinheit 11 vorgesehen sein. Diese zweite Messeinheit 11 weist vorzugsweise einen Sensor zur Ermittlung der vorgenannten physikalischen Stoffeigenschaft, insbesondere einen Leitfähigkeitssensor, auf und/oder einen Sensor zur Ermittlung der Temperatur der Milch auf.

Die meisten physikalischen Stoffeigenschaften sind temperaturabhängige Stoffeigenschaften. So ist beispielsweise die elektrische Leitfähigkeit abhängig von der Temperatur und dem Luftgehalt. Sie eignet sich daher im Rahmen der Erfindung sehr gut als Meß- und Regelgröße zur Beeinflussung der Milchschaumqualität. Zudem ist es für die Zubereitung von Heißgetränken besonders interessant zu ermitteln, ob die Zieltemperatur des Heißgetränkes erreicht ist, bzw. ob ein ermittelter Istwert des Heißgetränkes innerhalb eines vorgegebenen Sollwertbereiches liegt. Entsprechende Sollwerte können spezifisch für das jeweilige Heißgetränk als Datensatz auf dem Datenspeicher der Steuer- und/oder Regelvorrichtung 75 hinterlegt sein. Entsprechend ist die zweite Messeinheit über eine Signalverbindung 78 mit der Steuer- und/oder Regelvorrichtung 75 verbunden. Somit werden Messdaten zur Ermittlung der physikalischen Stoffeigenschaft durch die zweite Messeinheit 11 erfasst und/oder es werden aktuelle Temperaturen als Messdaten der Milch bzw. des Milchschaumes durch die zweite Messeinheit erfasst und über die Signalleitung 78 an die Steuer- und/oder Regelvorrichtung 75 übermittelt. Letztere erstellt für den Fall, dass die Messdaten oder die daraus ermittelten Stoffeigenschaften und/oder Temperaturen, außerhalb eines bestimmten Sollwertbereiches liegen einen Steuerbefahl 79 zur Regulierung eines oder mehrerer der Stellventile 93b, 93c der ersten und oder zweiten Heizleitung 90b und/oder 90c. Alternativ oder zusätzlich und nicht dargestellt kann auch eine Regulierung eines oder beider Umschaltventile 31, 35 durch die Steuer- und/oder Regelvorrichtung 75 erfolgen. Dadurch kann insbesondere eine Einstellung der Temperatur der Milch auf eine Zieltemperatur innerhalb des Sollwertbereichs erreicht werden und die Milchschaumqualität kann bei dieser Zieltemperatur durch Ermittlung der Leitfähigkeit überprüft und durch Nachregelung entsprechend eingestellt werden. Alternativ oder zusätzlich zur Regelung der zugeführten Luftmenge kann die Steuer- und/oder Regelvorrichtung 75 auch bevorzugt die Förder- und Pumpmenge der Milchpumpe 6 in Abhängigkeit der physikalischen Stoffeigenschaft, insbesondere elektrischen Leitfähigkeit, regeln. Auch dadurch ist die Konsistenz des Milchschaums veränderbar.

Die Auslassvorrichtung 2 kann ein Ventil 23 und Ausgabedüsen 21 aufweisen und eine Lanze 22 zur Ausgabe von Heißwasser und/oder Heißdampf z.B. für ein manuelles Aufschäumen.

Erfindungsgemäß wird nunmehr ein alternativer oder weiterer sowie einfach realisierbarer Weg aufgezeigt, die Qualität des Milchschaumes positiv zu beeinflussen. Dieser Weg kann bei dem vorstehenden beschriebenen Kaffeevollautomaten beschritten werden oder aber an einem anders aufgebauten Kaffeevollautomaten realisiert werden.

Bei diesem Weg wird die innerhalb des Komponentenweges von dem Milchbehälter 1 zu den Auslassdüsen 21 angeordnete Milchpumpe 6 mit einer Kühlvorrichtung K6 aktiv gekühlt. Dabei ist vorteilhaft vorgesehen, dass diese Kühlvorrichtung K6 separat und räumlich und baulich getrennt von einer ggf. optional vorgesehenen Kühlvorrichtung K1 - in der Regel ein Kühlfach - zur Kühlung des Milchbehälters 1 vorgesehen ist (siehe Fig. 1). Daran ist zunächst aus konstruktiver Hinsicht vorteilhaft, dass die Milchpumpe 6 nicht direkt an dem Milchbehälter 1 angeordnet und z.B. in deren Kühlschrank integriert werden muss.

Die Eigenschaften des Milchschaums und die Funktion des Milchsystems zum Erzeugen des Milchschaums sind bekannterweise im entscheidenden Maße von der Temperatur der zu verarbeitenden Milch abhängig. Mit steigender Milchtemperatur verschlechtert sich die Qualität und Stabilität des Milchschaums, da mit steigender Temperatur die Luftaufnahmekapazität der Milch sinkt. Daher wird beim Erzeugen von Milchschaum eine Rohmilch-Temperatur (Temperatur der dem System zugeführten Mich) von ≤5°C nahegelegt, bei er erfahrungsgemäß sehr gute Schaumeigenschaften erreichbar sind.

Im Rahmen dieser Erfindung wird nachgewiesen und sodann vorteilhaft genutzt, dass der grundsätzliche Zusammenhang von Milchtemperatur und Luftaufnahmekapazität zwar korrekt ist, dass aber durch die Reduktion auf die Rohmilchtemperatur und die damit verbundene 5 °C Restriktion im Wesentlichen nur weitere Faktoren indirekt kompensiert werden. Versuche im Rahmen der Erfindung haben dies bestätigt.

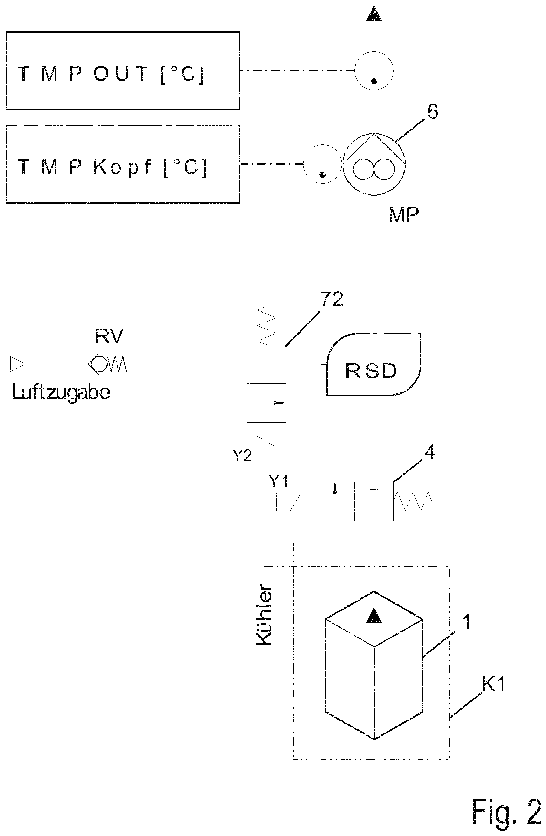

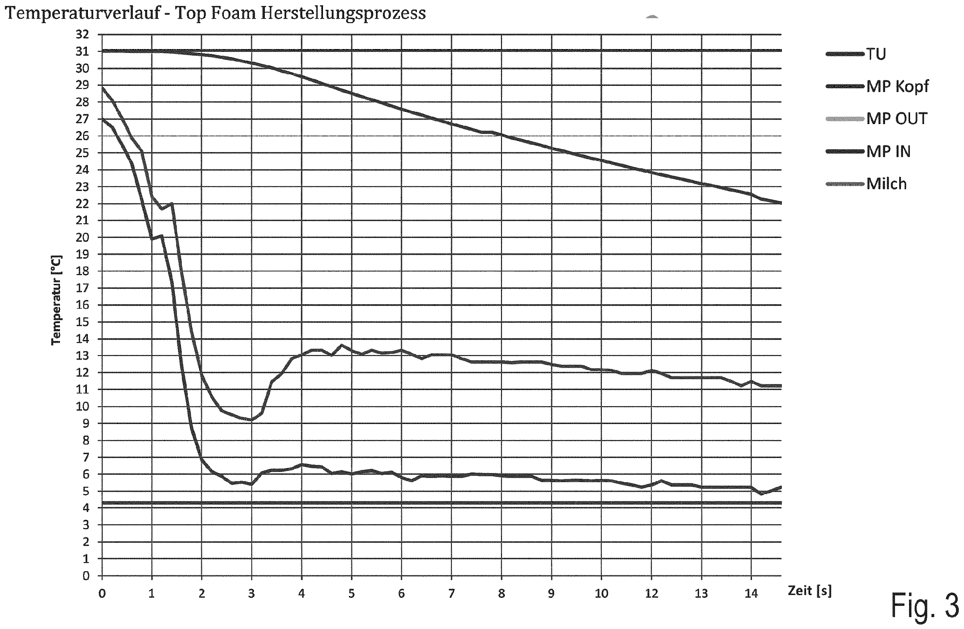

Fig. 2 zeigt einen Ausschnitt eines Kaffee-Vollautomaten zur Durchführung der Versuche zum Stand der Technik. Das Ergebnis dieser Versuche veranschaulichen die Fig. 3 und die erläuternde Tabelle Tab 1 am Ende dieser Beschreibung. Komponenten aus Fig. 1 sind in Fig. 2 mit deren Bezugszeichen bezeichnet.

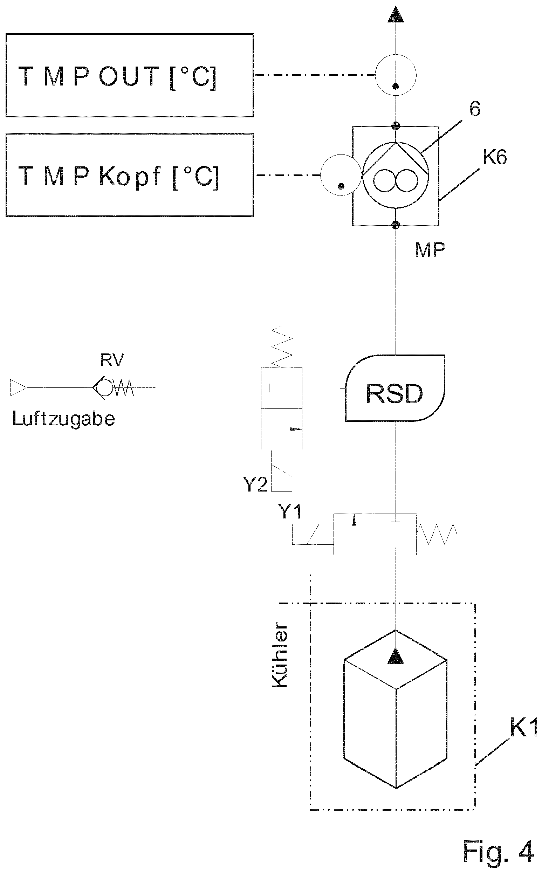

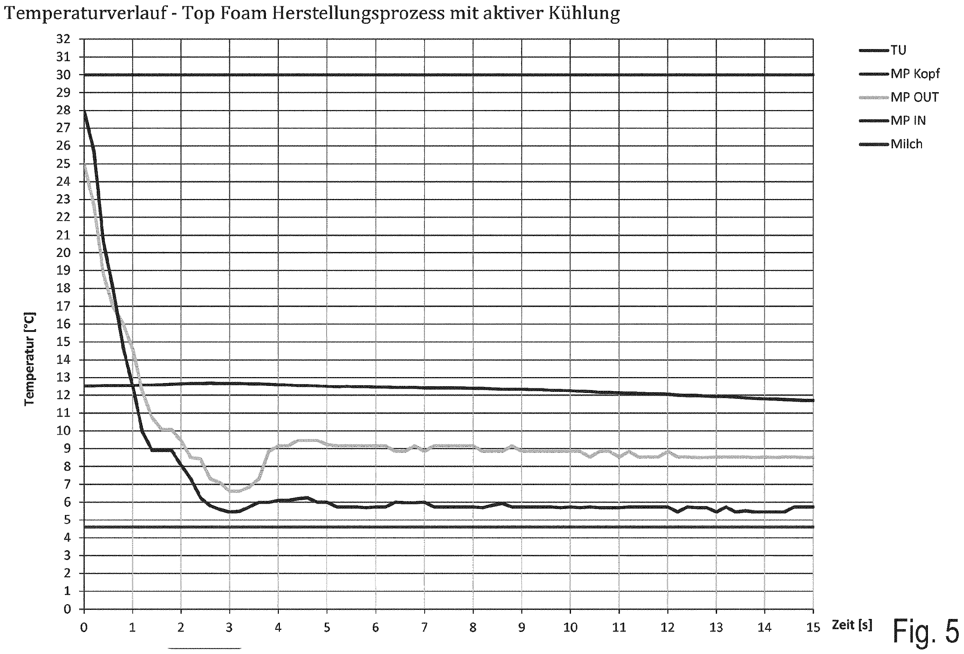

Fig. 4 zeigt einen Ausschnitt eines beispielhaften Kaffee-Vollautomaten zur Durchführung der Versuche zur Erfindung. Das Ergebnis dieser Versuche veranschaulichen die Fig. 5 und die erläuternde Tabelle Tab 2 am Ende dieser Beschreibung. Komponenten aus Fig. 2 sind in Fig. 4 mit deren Bezugszeichen bezeichnet.

Die "Verarbeitungs-Temperatur", folgend als Gemisch-Temperatur bezeichnet, beschreibt die Temperatur des Milch/Luft Gemisches vor der beabsichtigten direkten (Dampfzugabe) oder indirekten (Wärmeüberträger) Erwärmung. Gemessen wurde diese im Rahmen von Versuchen direkt druckseitig der Milchpumpe 6. Diese Versuche (siehe Tab 1, Fig. 3) haben gezeigt, dass mit einer Gemisch-Temperatur von ≤ 12 °C hervorragende Schaumeigenschaften mit weitem Einstellungsbereich verschiedener Konsistenzen reproduzierbar hergestellt werden können. Ab einer Gemisch-Temperatur > 12 °C wird der Einstellbereich eingeschränkt und ab einer Gemisch-Temperatur > 16 °C auch die Funktion.

Die wesentlichen Einflussfaktoren auf die Gemisch-Temperatur sind: Rohmilch, Milchpumpe, Leitungen, Luftzugabe und Luftkompression in der Milchpumpe.

Primären Einfluss hat die Rohmilchtemperatur, sekundären die Leitungstemperatur/-längen sowie Milchpumpentemperatur und tertiären die Luftkompression/ -temperatur. In Abhängigkeit der Umgebungstemperatur, der Kontaktflächen und Standzeiten können die sekundären Einflussfaktoren die Gemisch-Temperatur, im Verhältnis zur Temperatur der Rohmilch, deutlich erhöhen.

Vor dem Hintergrund dieser Versuchsergebnisse wird der Einfluss der sekundären Faktoren auf einfache Weise reduziert, so dass unabhängiger von der Rohmilch-Temperatur sehr gute Schaumeigenschaften konstant herstellbar sind.

Dazu wird vorgeschlagen, durch Vorkühlprozesse und Leitungsisolation der Einfluss der Leitungen auf die Gemisch-Temperatur wirkungsvoll (akzeptabler Zeitaufwand und Milchverlust) zu reduzieren.

Alternativ oder optional wird zur Reduktion der Milchpumpen-Temperatur eine aktive lokale Zwangskühlung vorgeschlagen und ergänzt, mit der die Milchpumpe - insbesondere deren Pumpenkopf - auf ein niedriges Temperaturniveau gekühlt und gehalten werden kann.

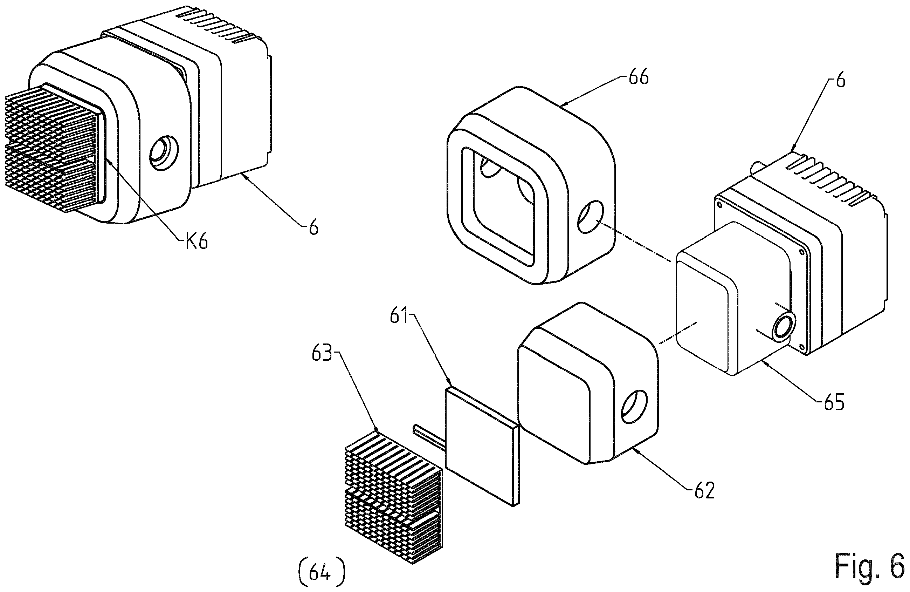

Daher ist der Milchpumpe 6 der Fig. 4 eine Kühlvorrichtung K6 direkt zugeordnet, insbesondere an deren Pumpenkopf befestigt, wie dies Fig. 6 veranschaulicht. Nach Fig. 6 weist die Milchpumpe 6 einen Kopf 60 auf. An dem Kopf ist die Kühlvorrichtung K1 befestigt. Diese Kühlvorrichtung K1 weist ein Peltierelement 61, einen oder mehrere - hier zwei - Kühlkörper 62, 63 auf und/oder einen Lüfter 64.

Diese Elemente sind mit Befestigungsmitteln 65 an der Milchpumpe 6, hier an dem Pumpenkopf 61, befestigt. Eine Isolierung 66 kann zusätzlich einen Teil der Milchpumpe 6 isolierend umgeben.

Dabei kann diese Zwangskühlung der Milchpumpe 6, insbesondere des Pumpenkopfes der Milchpumpe, mit verschiedenen Kühlvorrichtungen K6 realisiert werden.

Nach einer besonders bevorzugten Variante wird die Kühlvorrichtung K6 direkt an der Milchpumpe 6, insbesondere an dem Pumpenkopf 61, angeordnet.

Nach einer vorteilhaften Variante der Erfindung kann dazu ein Peltier-Element 61 verwendet werden. Dieses weist vorzugsweise einen oder mehrere Kühlkörper 62, 63 und/oder einen Lüfter 64 zur Wärmeübertragung und/oder -abfuhr auf.

Ein Peltier-Element ist ein elektrothermischer Wandler, welcher bei Stromdurchfluss eine Temperaturdifferenz erzeugt. Hauptvorteile der Verwendung des Peltier-Elements für die Kühlung der Pumpe, insbesondere des Pumpenkopfes, sind die geringe Größe, die Vermeidung bewegter Bauteile, die Vermeidung des Einsatzes fluiden wie Gasen und Flüssigkeiten zur Kühlung und die Möglichkeit, die Kühlleistung über die Versorgungsspannung zu steuern oder regeln zu können. Insbesondere ist es möglich, die Versorgungsspannung in Abhängigkeit der Umgebungstemperatur bedarfsabhängig zu steuern. Der verhältnismäßig geringe Wirkungsgrad ist bei den zu erwartenden Temperaturdifferenzen und Temperaturbereichen vernachlässigbar.

Durch die aufgeführten Untersuchungen (Fig.4, Tab 2) wird bestätigt, dass die Gemisch-Temperatur ein signifikanter Wert für die Eigenschaften (Konsistenz, Luftblasengröße, Ausgabetemperatur und Auslaufverhalten) des Milchschaums ist und dieser Wert nicht ausschließlich von der Rohmilchtemperatur abhängt. Durch eine aktive und vorzugsweise direkte lokale Zwangskühlung der Milchpumpe, insbesondere des Milchpumpenkopfs konnte die resultierende Gemisch-Temperatur deutlich reduziert werden, was die Milchschaumeigenschaften deutlich verbessert und Schwankungen dieser stark reduziert hat. Mit einem solchen System können höhere Rohmilchtemperaturen prozesssicherer verarbeitet, bessere Schaumqualitäten erzeugt, Schaumeigenschaften konstanter hergestellt sowie Prozesszeiten und Milchverluste reduziert werden.

Der Einsatz des zur Realisierung der Kühlvorrichtung K6 bevorzugt vorgesehenen Peltier-Elements zur Kühlung ermöglicht die Realisierung der Kühlung im sehr limitierten Bauraum direkt innerhalb der Maschine und die bietet die Möglichkeit die Kühlleistung nach Bedarf anzupassen.

Optional ist es sinnvoll die Temperatur direkt an der Milchpumpe, insbesondere in einem Kühlkörper der Milchpumpe anzupassen, um z.B. auf Veränderungen der Umgebungstemperatur zu reagieren. Der Wirkungsgrad der Peltier-Kühlung ist für die vorteilhaften Temperaturen der Milchpumpe und die auftretenden Temperaturdifferenzen ausreichend, wenn die "Kälte"-Verluste ausreichend gering sind (Isolierung Kühlkörper Pumpenkopf) bzw. die Wärme ausreichend Abgeführt wird (Geometrie Kühlköper-Abwärme und Luftstrom Lüfter). Die Schaffung und Sicherstellung konstanter Bedingungen ist auch als Option zum Verfahren zum Betreiben der Anlage aus Fig. 1 und/oder für eine selbständige Justierung und Regelung als Option sehr vorteilhaft.

Anzumerken ist nochmals, dass das Peltierelement 61 zwar eine besonders vorteilhafte Variante zur Realisierung der Kühlleinrichtung K6 darstellt. Alternativ kann diese Kühlvorrichtung K6 aber auch auf andere Weise realisiert werden, so z.B. als Wasserkühlungseinrichtung oder andere Kühlflüssigkeits-Kühlvorrichtung, als Luft-Kühlvorrichtung usw..

**Tab 1**

| **Zeit [s]** | **Phase** | **Erläuterung** | **Temperaturverlauf** |
|---|---|---|---|
| **0** | Ausgangsbedingungen | Nach einer Standzeit von >30min haben die Komponenten, Leitungen und die sich darin befindlichen Flüssigkeiten die jeweils vorherrschende Umgebungstemperatur angenommen. | TMilch im Kühlelement konstant bei 4,3 °C |
| | | | TMP IN = 27 °C // TMP OUT = 29 °C // TMP Kopf = 31 °C |
| | | | TUmgebung Maschinenintern konstant bei 31 °C // Raumtemperatur 21 °C |
| **0-1,5** | Ansaugen *Einstellbar [0-Xs]* | In der Ansaugphase wird Milch aus dem Behälter gefördert und dabei erwärmte Milch, Spülwasser und Lufteinschlüsse aus dem System entfernt. | TMP IN = Reduktion von 27 °C auf 20 °C |
| | | | TMP OUT = Reduktion von 29 °C auf 22 °C |
| | | | TMP Kopf = 31 °C konstant |
| **1,5** | Phasenübergang | Der Übergang der Ansaugzur Vorkühlphase wurde so eingestellt dass die sich in den Milchansaugleitungen befindliche Milch, zwischen Maschine und Kühlelement, sicher entsorgt wird. | Die ausreichend eingestellte Prozesszeit wird durch die kurzeitig konstante Temperatur an der "MP IN" Messstelle am Ende der Ansaugphase ersichtlich. Diese entspricht der Raumtemperatur und somit der Milchtemperatur im ungekühlten Bereich der Milchansaugleitungen. |
| **1,5-3,0** | Vorkühlen# *Einstellbar [0-Xs]* | In der Vorkühlphase werden mit der geförderten Milch die Komponenten und Leitungen auf Betriebstemperatur gekühlt. | TMP IN = Reduktion von 20 °C auf 5,2 °C |
| | | | ΔT von TMP IN zu TMilch = 1 °C |
| | | | TMP OUT = Reduktion von 22 °C auf 9,2 °C |
| | | | TMP Kopf = Reduktion von 31 °C auf 30 °C |
| **3,0** | Phasenübergang | Der Übergang der Vorkühlzur Anlaufphase wurde so eingestellt dass die der Milchpumpe zugeführte Milch annähernd die Rohmilchtemperatur aufweist. | Die Temperaturdifferenz von 1 °C zwischen TMP IN und TMilch wird durch die laufende Wärmeübertragung in den Leitungen hervorgerufen. Der Pumpenkopf der Milchpumpe wird im eingestellten Zeitraum, auf Grund des Materials und der Masse, nur unwesentlich gekühlt, was zu einer Temperaturdifferenz von 4 °C zwischen TMP IN und TMP OUT führt. |
| **3,0-5,0** | Anlaufen *Einstellbar [0-Xs*] | In der Anlaufphase wird der Milch Luft zugeführt, das Gemisch in der Milchpumpe verdichtet und evtl. weitere Verarbeitungsschritte(Erwärmung) gestartet. | TMP IN = Zunahme von 5,5 auf 6,1 °C |
| | | | TMP OUT = Zunahme von 9,2 °C auf 13,5 °C TMP Kopf = Reduktion von 30 °C auf 28,5 °C |
| **5,0** | Phasenübergang | Der Übergang der Anlaufzur Ausgabephase wurde so eingestellt dass das Milch-/Luftgemisch erwärmt (nicht dargestellt) und zur Ausgabe geleitet werden kann. | Die Luftzugabe bewirkt eine Temperaturerhöhung von 0,6 °C TMP IN und 4°C TMP OUT. Die deutliche Erhöhung wird hauptsächlich durch die Kompression der Luft im Pumpenkopf verursacht. Die Schaumausgabe starten bei einer Gemisch-Temperatur ca. 13°C. |
| **5,0-15,0** | Ausgabe *Einstellbar [0-*Xs] | In der Ausgabephase wird der Herstellungsprozess (Luft-zufuhr, Erwärmung, Nachbehandlung) kontinuierlich fortgesetzt und der Milchschaum ausgegeben. | TMP IN = ~ 5,5 °C |
| | | | TMP OUT =Reduktion von 13 °C auf 11 °C |
| | | | TMP Kopf = Reduktion von 28,5 °C auf 22 °C |
| | | | TUmgebung Maschinenintern konstant bei 31 °C |
| **10** | Qualitätsübergang | Etwa 5s nach Beginn der Ausgabe ist eine deutliche Verbesserung der Schaumeigenschaften erkennbar. | Während der Ausgabephase kühlt sich der Pumpenkopf der Milchpumpe weiter ab, dies senkt auch die Gemisch-Temperatur. 10 s nach Produktstart unterschreitet die Gemisch-Temperatur die Qualitätsgrenzschwelle von 12 °C (TMP Kopf < 24°C). |

**Tab. 2**

| **Zeit [s]** | Phase | Erläuterung | Temperaturverlauf |
|---|---|---|---|
| **0** | Ausgangsbedingungen | Nach einer Standzeit von >30min haben die Komponen-ten, Leitungen und die sich darin befindlichen Flüssigkei-ten die jeweils vorherrschende Umgebungstemperatur angenommen. Der Pumpenkopf wird aktive auf ca. 12 °C zwangsgekühlt. | TMilch im Kühlelement konstant bei 4,6 °C |
| | | | TMP IN = 28 °C // TMP OUT = 25 °C // TMP Kopf = 12,5 °C |
| | | | TUmgebung Maschinenintern konstant bei 30 °C / Raumtemperatur 21 °C |
| **0-1,5** | Ansaugen Einstellbar [0-Xs] | In der Ansaugphase wird Milch aus dem Behälter gefördert und dabei erwärmte Milch, Spülwasser und Lufteinschlüsse aus dem System entfernt. | TMP IN = Reduktion von 27 °C auf 9 °C |
| | | | TMP OUT = Reduktion von 29 °C auf 10 °C |
| | | | TMP Kopf = 12,5 °C konstant |
| **1,5** | Phasenübergang | Der Übergang der Ansaugzur Vorkühlphase wurde so eingestellt dass die sich in den Milchansaugleitungen befindliche Milch entsorgt wird. | Die ausreichend eingestellte Prozesszeit wird durch die kurzeitig konstante Temperatur an der "MP IN" Messstelle am Ende der Ansaugphase ersichtlich. |
| **1,5** - **3,0** | Vorkühlen# Einstellbar [0-Xs] | In der Vorkühlphase werden mit der geförderten Milch die Komponenten und Leitungen auf Betriebstemperatur gekühlt. | TMP IN = Reduktion von 9 °C auf 5,5 °C |
| | | | ΔT von TMP IN zu TMilch = 1 °C |
| | | | TMP OUT = Reduktion von 10 °C auf 6,7 °C |
| | | | TMP Kopf = Konstant 12,5 °C |
| **3,0** | Phasenübergang | Der Übergang der Vorkühlzur Anlaufphase wurde so eingestellt dass die der Milchpumpe zugeführte Milch annähernd die Rohmilchtemperatur aufweist. | Die Temperaturdifferenz von 1 °C zwischen TMP IN und TMilch wird durch die laufende Wärmeübertragung in den Leitungen hervorgerufen. Durch die aktive Zwangskühlung des Pumpenkopfs der Milchpumpe wird eine geringe Temperaturdifferenz von 1 °C zwi-schen TMP IN und TMP OUT erreicht. |
| **3,0 - 5,0** | Anlaufen Einstellbar [0-Xs] | In der Anlaufphase wird der Milch Luft zugeführt, das Gemisch in der Milchpumpe verdichtet und evtl. weitere Verarbeitungsschritte(Erwärmung) gestartet. | TMP IN = Zunahme von 5,5 °C auf 6,0 °C |
| | | | TMP OUT = Zunahme von 6,7 °C auf 9,2 °C |
| | | | TMP Kopf = Konstant 12,5 °C |
| **5,0** | Phasenübergang | Der Übergang der Anlaufzur Ausgabephase wurde so eingestellt dass das Milch-/Luftgemisch erwärmt (nicht dargestellt) und zur Ausgabe geleitet werden kann. | Die Luftzugabe bewirkt eine Temperaturerhöhung von 0,5 °C TMP IN / TMilch und 2,5°C TMP OUT / TMP IN. Die Erhöhung wird hauptsächlich durch die Kompression der Luft im Pumpen-kopf verursacht. Die Schaumausgabe starten bei einer Gemisch-Temperatur ca.9°C. |
| **5,0 - 15,0** | Ausgabe Einstellbar [0-Xs] | In der Ausgabephase wird der Herstellungsprozess (Luft-zufuhr, Erwärmung, Nachbehandlung) kontinuierlich fortgesetzt und der Milchschaum ausgegeben. | TMP IN = ~ 6 °C |
| | | | TMP OUT = ~ 9 °C |
| | | | TMP Kopf = ~ 12 °C |
| | | | TUmgebung Maschinenintern konstant bei 30 °C |
| **5,0 - 15,0** | Ausgabequalität | Die Schaumeigenschaften sind hervorragend und über die Ausgabezeit konstant. | Die Gemisch-Temperatur von 9 °C liegt im optimalen Bereich wird konstant gehalten. |

**Bezugszeichenliste**

| | |
|---|---|
| Milchbehälter | 1 |
| Kühlvorrichtung | K1 |
| Auslassvorrichtung | 2 |
| Ausgabedüsen | 21 |
| Lanze | 22 |
| Ventil | 23 |
| Milchleitung | 3 |
| Drei-Wegeventil | 31 |
| Verarbeitungsleitung | 32 |
| Verarbeitungsleitung | 33 |
| Verarbeitungsleitung | 34 |
| Drei-Wegeventil | 35 |
| Absperrventil | 4 |
| Mischkammer | 5 |
| Milchpumpe | 6 |
| Kühlvorrichtung | K6 |
| Peltierelement | 61 |
| Kühlkörper | 62, 63 |
| Lüfter 64 | 64 |
| Befestigungsmittel | 65 |
| Isolierung | 66 |
| Luftzuführsystem | 7 |
| Mischkammer | 70 |
| Luftleitung | 71 |
| Rückschlagventil | 72 |
| Stelleinheit | 73 |
| Luftquelle | 74 |
| Steuer- und/oder Regelvorrichtung | 75 |
| Signalleitung | 76 |
| Signalleitung | 77 |
| Signalleitung | 78 |
| Signalleitung | 79 |
| Erste Messeinheit | 8 |
| Verarbeitungseinrichtung | 9 |
| Keine Erwärmungseinheit | 90a |
| Erste Erwärmungseinheit | 90b |
| Zweite Erwärmungseinheit | 90c |
| Heizleitung | 91b |
| Heizleitung | 91c |
| Rückschlagventil | 92b |
| Rückschlagventil | 92c |
| Stellventil | 93b |
| Stellventil | 93c |
| Dampferzeugungseinrichtung | 94b |
| Dampferzeugungseinrichtung | 94c |
| Nachbearbeitungsvorrichtung, Homogenisator | 10 |
| Zweite Messeinheit | 11 |

## Patentansprüche

1. Verfahren, mit dem eine Milch-Luft-Emulsion, insbesondere ein Milchschaum, mit einer Vorrichtung zum Erzeugen eines Milchschaums hergestellt werden, wobei die Vorrichtung zumindest einen Milchbehälter (1) und wenigstens eine von Milch durchflossene Milchleitung (3) aufweist sowie wenigstens ein Luftzuführsystem (7) zur Erzeugung einer Milch-Luft-Emulsion aus der Milch, und wobei die Vorrichtung zumindest eine Milchpumpe (6) aufweist und vorzugsweise eine Verarbeitungseinrichtung (9) zur Erwärmung der Milch-Luft-Emulsion; wobei eine Milch-Luft-Emulsion aus bereitgestellter Milch und Luft erzeugt wird, **dadurch gekennzeichnet, dass** ein direktes Kühlen der Milchpumpe (6) unabhängig von einer ggf. vorgesehenen Kühlung eines Milchbehälters (1) erfolgt.

2. Verfahren nach Anspruch 1, **dadurch gekennzeichnet, dass** das direkte Kühlen der Milchpumpe (6) direkt an dieser Komponente innerhalb eines Gehäuses eines Kaffeevollautomaten erfolgt.

3. Verfahren nach Anspruch 1 oder 2, **dadurch gekennzeichnet, dass** ein direktes Kühlen der wenigstens einen milchberührenden Leitung (3) erfolgt, wobei das Kühlen der wenigstens einen milchberührenden Leitung (3) direkt an dieser innerhalb des Gehäuses des Kaffeevollautomaten erfolgt.

4. Verfahren nach einem der vorstehenden Ansprüche, **dadurch gekennzeichnet, dass** ein Pumpenkopf der Milchpumpe (6) mit einer direkt der Milchpumpe (6), insbesondere einem Milchpumpenkopf (61), zugeordneten Kühlvorrichtung (K6) gekühlt wird.

5. Verfahren nach Anspruch 4, **dadurch gekennzeichnet, dass** als Kühlvorrichtung (K6) ein Peltierelement (61) verwendet wird.

6. Verfahren nach einem der vorstehenden Ansprüche 4 oder 5, **dadurch gekennzeichnet, dass** als Kühlvorrichtung (K6) eine ein Kühlfluid als Kühlmedium einsetzende Kühlung verwendet wird.

7. Verfahren nach einem der vorstehenden Ansprüche, **dadurch gekennzeichnet, dass** die Temperatur der Milchpumpe (6), insbesondere die Temperatur des Milchpumpenkopfes, direkt oder indirekt ermittelt wird und dass die ermittelte Temperatur als Information zur Steuerung oder Regelung des Betriebs der Kühlvorrichtung (K6) verwendet wird.

8. Verfahren nach einem der vorstehenden Ansprüche, **dadurch gekennzeichnet, dass** die Temperatur der Milch-/Luftemulsion direkt oder indirekt ermittelt wird und dass die ermittelte Temperatur als Information zur Steuerung oder Regelung des Betriebs der Kühlvorrichtung (K6) verwendet wird.

9. Verfahren nach einem der vorstehenden Ansprüche, **dadurch gekennzeichnet, dass** die Temperatur der Milch und/oder der Milch-/Luftemulsion und/oder der Milchpumpe (6) direkt oder indirekt ermittelt wird und dass beim Überschreiten einer jeweiligen Grenztemperatur jeweils ein Warnsignal erzeugt wird.

10. Verfahren nach einem der vorstehenden Ansprüche, **dadurch gekennzeichnet, dass** eine Milchpumpendrehzahl in Abhängigkeit von der Temperatur der Milch und/oder der Milch-/Luftemulsion und/oder der Milchpumpe (6) gesteuert und/oder geregelt wird.

11. Verfahren nach einem der vorstehenden Ansprüche, **dadurch gekennzeichnet, dass** eine Luftzufuhr in Abhängigkeit von der Temperatur der Milch und/oder der Milch-/Luftemulsion und/oder der Milchpumpe (6) gesteuert und/oder geregelt wird.

12. Verfahren nach einem der vorstehenden Ansprüche, **dadurch gekennzeichnet, dass** das Durchführen des Verfahrens in Abhängigkeit von einem oder mehreren Grenzwerten der Temperatur der Milch und/oder der Milch-/Luftemulsion und/oder der Milchpumpe (6) und in Abhängigkeit von einem Zeitparameter unterbrochen wird.

13. Vorrichtung zur Durchführung eines Verfahrens nach einem der vorstehenden Ansprüche, welche zumindest einen Milchbehälter (1) und wenigstens eine von Milch durchflossene Milchleitung (3) aufweist sowie wenigstens ein Luftzuführsystem (7) zur Erzeugung einer Milch-Luft-Emulsion aus der Milch, und welche zumindest eine Milchpumpe (6) aufweist und vorzugsweise eine Verarbeitungseinrichtung (9) zur Erwärmung der Milch-Luft-Emulsion; **dadurch gekennzeichnet dass** eine Kühlvorrichtung (K6) zum Kühlen der Milchpumpe (6) direkt an der Milchpumpe unabhängig von einer ggf. vorgesehenen Kühlvorrichtung (K1) zur Kühlung eines Milchbehälters (1) vorgesehen ist.

14. Vorrichtung nach Anspruch 13, **dadurch gekennzeichnet, dass** ein Pumpenkopf (61) der Milchpumpe (6) mit der direkt der Milchpumpe zugeordneten Kühlvorrichtung (K6) gekühlt wird.

15. Vorrichtung nach Anspruch 14 oder 15, **dadurch gekennzeichnet, dass** die Kühlvorrichtung (K6) als ein Peltierelement (61) ausgebildet ist oder ein solches aufweist oder dass eine ein Fluid als Kühlmedium einsetzende Kühlvorrichtung (K6) verwendet wird.

16. Vorrichtung nach einem der vorstehenden Ansprüche 13 bis 15, **dadurch gekennzeichnet, dass** eine Steuerungs- und/oder Regelungsvorrichtung (75) vorgesehen ist, welche dazu ausgelegt ist, die Temperatur der Milchpumpe (6), insbesondere die Temperatur des Milchpumpenkopfes (61), direkt oder indirekt zu ermitteln und die ermittelte Temperatur als eine Information zur Steuerung oder Regelung des Betriebs der Kühlvorrichtung (K6) zu verwenden.

## Claims

1. Method for producing a milk-air emulsion, in particular a milk froth, with a device for producing a milk froth, wherein the device comprises at least one milk container (1) and at least one milk line (3) through which milk flows, as well as at least one air supply system (7) for producing a milk-air emulsion from the milk, and wherein the device comprises at least one milk pump (6) and preferably a processing device (9) for heating the milk-air emulsion; wherein a milk-air emulsion is produced from provided milk and air, **characterized in that** a direct cooling of the milk pump (6) is carried out independently of an optionally provided cooling of a milk container (6).

2. Method according to claim 1, **characterized in that** the direct cooling of the milk pump (6) takes place directly at this component within a housing of a fully automatic coffee machine.

3. Method according to claim 1 or 2, **characterized in that** direct cooling of the at least one milk-contacting line (3) takes place, wherein the cooling of the at least one milk-contacting line (3) takes place directly on the latter within the housing of the fully automatic coffee machine.

4. Method according to one of the preceding claims, **characterized in that** a pump head of the milk pump (6) is cooled with a cooling device (K6) directly associated with the milk pump (6), in particular a milk pump head (61).

5. Method according to claim 4, **characterized in that** a Peltier element (61) is used as cooling device (K6).

6. Method according to one of the preceding claims 4 or 5, **characterized in that** cooling using a cooling fluid as cooling medium is used as cooling device (K6).

7. Method according to one of the preceding claims, **characterized in that** the temperature of the milk pump (6), in particular the temperature of the milk pump head, is determined directly or indirectly, and **in that** the determined temperature is used as information for controlling or regulating the operation of the cooling device (K6).

8. Method according to one of the preceding claims, **characterized in that** the temperature of the milk/air emulsion is determined directly or indirectly, and **in that** the determined temperature is used as information for controlling or regulating the operation of the cooling device (K6).

9. Method according to one of the preceding claims, **characterized in that** the temperature of the milk and/or of the milk/air emulsion and/or of the milk pump (6) is determined directly or indirectly, and **in that** a warning signal is generated in each case when a respective limit temperature is exceeded.

10. Method according to one of the preceding claims, **characterized in that** a milk pump speed is controlled and/or regulated as a function of the temperature of the milk and/or of the milk/air emulsion and/or of the milk pump (6).

11. Method according to one of the preceding claims, **characterized in that** an air supply is controlled and/or regulated as a function of the temperature of the milk and/or the milk/air emulsion and/or the milk pump (6).

12. Method according to one of the preceding claims, **characterized in that** the carrying out of the method is interrupted as a function of one or more limit values of the temperature of the milk and/or of the milk/air emulsion and/or of the milk pump (6) and as a function of a time parameter.

13. Device for carrying out a method according to one of the preceding claims, which comprises at least one milk container (1) and at least one milk line (3) through which milk flows and at least one air supply system (7) for producing a milk/air emulsion from the milk, and which comprises at least one milk pump (6) and preferably a processing device (9) for heating the milk/air emulsion; **characterized in that** a cooling device (K6) for cooling the milk pump (6) is provided directly on the milk pump independently of any optionally provided cooling device (K1) for cooling a milk container (1).

14. Device according to claim 13, **characterized in that** a pump head (61) of the milk pump (6) is cooled with the cooling device (K6) directly associated with the milk pump.

15. Device according to claim 14 or 15, **characterized in that** the cooling device (K6) is designed as or comprises a Peltier element (61), or **in that** a cooling device (K6) using a fluid as cooling medium is used.

16. Device according to one of the preceding claims 13 to 15, **characterized in that** a control and/or regulating device (75) is provided, which is designed to directly or indirectly determine the temperature of the milk pump (6), in particular the temperature of the milk pump head (61), and to use the determined temperature as information for controlling or regulating the operation of the cooling device (K6).

## Revendications

1. Procédé pour la production d'une émulsion de lait et d'air, en particulier d'une mousse de lait, avec un dispositif pour la production d'une mousse de lait, dans lequel le dispositif comprend au moins un réservoir de lait (1) et au moins une conduite de lait (3) parcourue par du lait ainsi qu'au moins un système d'arrivée d'air (7) pour la production d'une émulsion de lait et d'air à partir du lait, et dans lequel le dispositif comprend au moins une pompe à lait (6) et de préférence une installation de traitement (9) pour le chauffage de l'émulsion de lait et d'air, une émulsion de lait et d'air étant produite à partir de lait et d'air fournis, **caractérisé en ce que** la pompe à lait (6) est refroidie directement, indépendamment d'un refroidissement éventuellement prévu d'un réservoir de lait (1).

2. Procédé selon la revendication 1, **caractérisé en ce que** le refroidissement direct de la pompe à lait (6) est effectué directement sur ce composant à l'intérieur du boîtier d'une machine à café automatique.

3. Procédé selon la revendication 1 ou 2, **caractérisé en ce qu'**un refroidissement direct de l'au moins une conduite en contact avec le lait (3) est effectué, le refroidissement de l'au moins une conduite en contact avec le lait (3) ayant lieu directement sur celle-ci à l'intérieur du boîtier de la machine à café automatique.

4. Procédé selon l'une des revendications précédentes, **caractérisé en ce qu'**une tête de pompe de la pompe à lait (6) est refroidie avec un dispositif de refroidissement (K6) directement associé à la pompe à lait (6), en particulier à une tête de pompe à lait (61).

5. Procédé selon la revendication 4, **caractérisé en ce qu'**un élément de Peltier (61) est utilisé comme dispositif de refroidissement (K6).

6. Procédé selon l'une des revendications 4 ou 5, **caractérisé en ce qu'**un refroidisseur mettant en œuvre du fluide de refroidissement comme réfrigérant est utilisé comme dispositif de refroidissement (K6).

7. Procédé selon l'une des revendications précédentes, **caractérisé en ce que** la température de la pompe à lait (6), en particulier la température de la tête de pompe à lait, est déterminée directement ou indirectement et **en ce que** la température déterminée est utilisée comme information pour contrôler ou réguler le fonctionnement du dispositif de refroidissement (K6).

8. Procédé selon l'une des revendications précédentes, **caractérisé en ce que** la température de l'émulsion de lait et d'air est déterminée directement ou indirectement et **en ce que** la température déterminée est utilisée comme information pour contrôler ou réguler le fonctionnement du dispositif de refroidissement (K6).

9. Procédé selon l'une des revendications précédentes, **caractérisé en ce que** la température de l'émulsion de lait et d'air et/ou de la pompe à lait (6) est déterminée directement ou indirectement et **en ce qu'**un signal d'avertissement est émis lorsqu'une limite de température correspondante est dépassée.

10. Procédé selon l'une des revendications précédentes, **caractérisé en ce qu'**une vitesse de rotation de la pompe à lait est contrôlée et/ou régulée en fonction de la température du lait et/ou de l'émulsion de lait et d'air et/ou de la pompe à lait (6).

11. Procédé selon l'une des revendications précédentes, **caractérisé en ce qu'**une arrivée d'air est contrôlée et/ou régulée en fonction de la température du lait et/ou de l'émulsion de lait et d'air et/ou de la pompe à lait (6).

12. Procédé selon l'une des revendications précédentes, **caractérisé en ce que** l'exécution du procédé est interrompue en fonction d'une ou plusieurs limites de température du lait et/ou de l'émulsion de lait et d'air et/ou de la pompe à lait (6) et en fonction d'un paramètre de temps.

13. Dispositif pour la mise en œuvre d'un procédé selon l'une des revendications précédentes, qui comprend au moins un réservoir de lait (1) et au moins une conduite de lait (3) parcourue par du lait ainsi qu'au moins un système d'arrivée d'air (7) pour la production d'une émulsion de lait et d'air à partir du lait, et qui comprend au moins une pompe à lait (6) et, de préférence, une installation de traitement (9) pour le chauffage de l'émulsion de lait et d'air, **caractérisé en ce qu'**un dispositif de refroidissement (K6) est prévu pour refroidir directement la pompe à lait (6), indépendamment d'un dispositif de refroidissement (K1) éventuellement prévu pour refroidir un réservoir de lait (1).

14. Dispositif selon la revendication 13, **caractérisé en ce qu'**une tête de pompe (61) de la pompe à lait (6) est refroidie avec le dispositif de refroidissement (K6) directement associé à la pompe à lait.

15. Dispositif selon la revendication 14 ou 15, **caractérisé en ce que** le dispositif de refroidissement (K6) est conformé comme un élément de Peltier (61) ou comporte un élément de Peltier ou **en ce qu'**un fluide est utilisé comme dispositif de refroidissement (K6) mettant en œuvre un réfrigérant.

16. Dispositif selon l'une des revendications 13 à 15, **caractérisé en ce qu'**il est prévu un dispositif de contrôle et/ou de régulation (75) conçu pour déterminer directement ou indirectement la température de la pompe à lait (6), en particulier la température de la tête de pompe à lait (61), et pour utiliser la température déterminée comme information pour contrôler ou réguler le fonctionnement du dispositif de refroidissement (K6).
